# EUROPEAN PATENT SPECIFICATION

(11) **EP 4 529 100 B1**
(45) Date of publication and mention of the grant of the patent: **26.11.2025**
(21) Application number: 24198942.5
(22) Date of filing: 06.09.2024
(51) Int. Cl.: H04L 12/46

(54) **METHOD AND APPARATUS FOR INTER-COMMUNICATION BETWEEN LAYER 2 AND LAYER 3 VPNS**
VERFAHREN UND VORRICHTUNG ZUR KOMMUNIKATION ZWISCHEN SCHICHT 2 UND SCHICHT 3 VPNS
PROCÉDÉ ET APPAREIL D'INTERCOMMUNICATION ENTRE DES RÉSEAUX PRIVÉS VIRTUELS DE COUCHE 2 ET DE COUCHE 3

(30) Priority: 22.09.2023 CN 202311236323
(43) Date of publication of application: 26.03.2025
(73) Proprietor: New H3C Technologies Co., Ltd., Hangzhou, Zhejiang 310052 (CN)
(72) Inventor: Wen, Wen, Beijing, 100102 (CN)
(74) Representative: Zimmermann & Partner Patentanwälte mbB

(56) References cited:
- US-A1- 2011 317 703
- US-A1- 2017 373 973
- US-A1- 2020 067 812

## Description

### TECHNICAL FIELD

The present disclosure relates to the technical field of network communication, in particular to a method and an apparatus for inter-communication between L2 and L3 VPNs.

### BACKGROUND

With the continuous development of network technology, especially the rapid development of MPLS VPN technology, apparatuses in the network needs to achieve the data inter-communication capability between L2 VPN and L3 VPN.

At present, in a networking method, MPLS L2 VPN termination and MPLS L3 VPN (or IP backbone network) access functions can be implemented by one apparatus to reduce the number of apparatuses deployed in the network, lower the networking costs, and simplify a network deployment. The apparatus Provider Edge-Aggregation (PE-AGG ) connecting MPLS L2 VPN and MPLS L3 VPN (or IP backbone network) may be used to terminate the MPLS L2 VPN and access the backbone network, as can be seen in document US 2011/317703 A1.

### SUMMARY

The present disclosure provides a method and an apparatus for inter-communication between L2 and L3 VPNs.

In a first aspect, the present disclosure provides a method for inter-communication between L2 and L3 VPNs, applied to a PE-AGG equipment comprising a physical interface of a pseudo wire PW of L2 VPN, a physical interface of a public network of L3 VPN, a L2 VE logical interface, and a L3 VE logical interface, wherein the method comprises:
sending an ARP request packet to a CPU, wherein the ARP request packet requesting a MAC address of the L3 VE logical interface by a target user is received through the physical interface of the PW;
learning a target ARP table entry corresponding to the ARP request packet on the L3 VE logical interface, wherein a MAC address comprised in the target ARP table entry is a MAC address of the target user, an outgoing interface comprised in the target ARP table entry is the L2 VE logical interface, and the target ARP table entry is used to indicate traffic forwarding from the target user's L3 VPN to L2 VPN;
feeding back an ARP response to the target user comprising the MAC address of the L3 VE logical interface.

Preferably, the method further comprises:
obtaining an original packet by terminating a L2 VPN packet received through the L2 VE interface, wherein a destination MAC address of the original packet is the MAC address of the L3 VE logical interface;
sending the original packet to the L3 VE logical interface based on the destination MAC address of the original packet;
performing a routing lookup, implementing an L3 VPN encapsulation on the original packet through the L3 VE logical interface, and forwarding an encapsulated L3 VPN packet through the physical interface of the public network of L3 VPN.

Preferably, the method further comprises:
obtaining an original packet by decapsulating a L3 VPN packet received through the L3 VE logical interface;
looking up an ARP table based on a destination IP address of the original packet to obtain a target MAC address corresponding to the destination IP address of the original packet;
replacing the destination MAC address of the original packet with the target MAC address, to obtain a packet with the replaced MAC address;
implementing a L2 VPN encapsulation on the packet with the replaced MAC address through the L2 VE logical interface, and forwarding an encapsulated L2 VPN packet through the physical interface of the PW of L2 VPN.

Preferably, if the PW is a primary or a secondary PW or an ECMP equivalent multi-path route; the outgoing interfaces of the target ARP are multiple L2 VE logical interfaces;
determining a target PW for transmitting traffic to which the L3 VPN packet belongs;
replacing the destination MAC address of the original packet with the target MAC address and encapsulating a private network label of the target PW through a first-level Forwarding Equivalence Class (FEC) encapsulation based on the ECMP;
obtaining the encapsulated L2 VPN packet by encapsulating a public network label of the target PW through a second-level FEC encapsulation to L2 VPN based on the ECMP.

In a second aspect, the present disclosure provides an apparatus for inter-communication between L2 and L3 VPNs, applied to a PE aggregation equipment comprising a physical interface of a pseudo wire PW of L2 VPN, a physical interface of a public network of L3 VPN, a L2 VE logical interface, and a L3 VE logical interface, wherein the apparatus comprises:
a sending unit, to send an ARP request packet to a CPU, wherein the ARP request packet requesting a MAC address of the L3 VE logical interface by a target user is received through the physical interface of the PW;
a learning unit, to learn a target ARP table entry corresponding to the ARP request packet on the L3 VE logical interface, wherein a MAC address comprised in the target ARP table entry is a MAC address of the target user, an outgoing interface comprised in the target ARP table entry is the L2 VE logical interface, and the target ARP table entry is used to indicate traffic forwarding from the target user's L3 VPN to L2 VPN;
a response unit, to feed back an ARP response to the target user comprising the MAC address of the L3 VE logical interface.

Preferably, the apparatus further comprises:
a termination unit, to obtain an original packet by terminating a L2 VPN packet received through the L2 VE interface, wherein a destination MAC address of the original packet is the MAC address of the L3 VE logical interface;
a sending unit, to send the original packet to the L3 VE logical interface based on the destination MAC address of the original packet;
a forwarding unit, to perform a routing lookup, implement an L3 VPN encapsulation on the original packet through the L3 VE logical interface, and forward an encapsulated L3 VPN packet through the physical interface of the public network of L3 VPN.

Preferably, the apparatus further comprises:
a decapsulation unit, to obtain an original packet by decapsulating a L3 VPN packet received through the L3 VE logical interface;
a lookup unit, to lookup an ARP table based on a destination IP address of the original packet to obtain a target MAC address corresponding to the destination IP address of the original packet;
a replacement unit, to replace the destination MAC address of the original packet with the target MAC address, to obtain a packet with the replaced MAC address;
an encapsulation unit, to implement a L2 VPN encapsulation on the packet with the replaced MAC address through the L2 VE logical interface, and forward an encapsulated L2 VPN packet through the physical interface of the PW of L2 VPN.

Preferably, if the PW is a primary or a secondary PW or an ECMP equivalent multi-path route; the outgoing interfaces of the target ARP are multiple L2 VE logical interfaces;
the apparatus further comprises a determining unit, to determine a target PW for transmitting traffic to which the L3 VPN packet belongs;
the replacement unit is to replace the destination MAC address of the original packet with the target MAC address and encapsulate a private network label of the target PW through a first-level FEC Forwarding Equivalence Class encapsulation based on the ECMP;
the encapsulation unit is to obtain the encapsulated L2 VPN packet by encapsulating a public network label of the target PW through a second-level FEC encapsulation to L2 VPN based on the ECMP.

In a third aspect, an example of the present disclosure provides an apparatus for inter-communication between L2 and L3 VPNs, comprising:
a memory, to store program instructions;
a processor, to call the program instructions stored in the memory, and execute blocks of any of the methods described in the first aspect according to obtained program instructions.

In a fourth aspect, an example of the present disclosure further provides a computer -readable storage medium having stored therein computer-executable instructions, which are to cause the computer to perform blocks of any of the methods described in the first aspect.

In summary, the method for inter-communication between L2 and L3 VPNs is applied to a PE-AGG equipment comprising a physical interface of a pseudo wire PW of L2 VPN, a physical interface of a public network of L3 VPN, a L2 VE logical interface, and a L3 VE logical interface, wherein the method comprises: sending an ARP request packet to a CPU, wherein the ARP request packet requesting a MAC address of the L3 VE logical interface by a target user is received through the physical interface of the PW; learning a target ARP table entry corresponding to the ARP request packet on the L3 VE logical interface, wherein a MAC address comprised in the target ARP table entry is a MAC address of the target user, an outgoing interface comprised in the target ARP table entry is the L2 VE logical interface, and the target ARP table entry is used to indicate traffic forwarding from the target user's L3 VPN to L2 VPN; feeding back an ARP response to the target user comprising the MAC address of the L3 VE logical interface.

By adopting the method for inter-communication between L2 and L3 VPNs provided by the examples of the present disclosure, an inter-switching of L2VPN to L3VPN is realized without using a loopback solution and the ARP supports multiple next hops, and a non-loopback solution of L2VPNtoL3VPN forwarding is realized by using a second-level ECMP. A first-level ECMP is to encapsulate a private network label of a PW and to replace an inner MAC. The second-level ECMP encapsulates a public network label of the PW, which solves a bandwidth limitation of a loopback port and does not need to occupy a physical interface of a PE-AGG equipment.

### BRIEF DESCRIPTION OF THE DRAWINGS

In order to more clearly illustrate technical solutions in the examples of the present disclosure or the prior art, the drawings to be used in the description of the examples of the present disclosure or the prior art will be briefly introduced below, and it will be obvious that the drawings in the following description are only some examples recited in the present disclosure, and other drawings can be obtained according to these drawings of the examples of the present disclosure for ordinary skilled in the field.
Figure 1 is a diagram of a networking of L2 VPN accessing L3 VPN or an IP backbone network;
Figure 2 is a diagram of loopback solution forwarding in related technologies;
Figure 3 is a detailed schematic diagram of a method for inter-communication between L2 VPN and L3 VPN based on an example of the present disclosure;
Figure 4 is a schematic diagram of traffic forwarding from L2 VPN to L3 VPN based on an example of the present disclosure;
Figure 5 is a schematic diagram of traffic forwarding from L3 VPN to L2 VPN based on an example of the present disclosure;
Figure 6 is a schematic diagram of an encapsulation of traffic forwarding from L3 VPNs to L2 VPNs based on an example of the present disclosure;
Figure 7 is a schematic diagram of a structure of an apparatus for inter-communication between L2 VPN and L3 VPN based on an example of the present disclosure;
Figure 8 is a schematic diagram of a hardware architecture of an apparatus for inter-communication between L2 VPN and L3 VPN based on an example of the present disclosure.

### DETAILED DESCRIPTION

The terms used in the present disclosure are for the purpose of describing a particular example only, and are not intended to be limiting of the present disclosure. The singular forms such as "a", 'said", and "the" used in the present disclosure and the appended claims are further intended to comprise the plural forms, unless the context clearly indicates otherwise. It is also to be understood that the term "and/or" as used herein refers to any or all possible combinations that comprise one or more associated listed items.

It is to be understood that although different information may be described by using the terms such as first, second, third, etc. in the present disclosure, these information should not be limited to these terms. These terms are used only to distinguish the same type of information from each other. For example, without departing from the scope of the present disclosure, the first information may also be referred to as the second information and similarly, the second information may also be referred to as the first information. Depending on the context, the word "if" as used herein may be interpreted as "when" or "as" or "in response to determining".

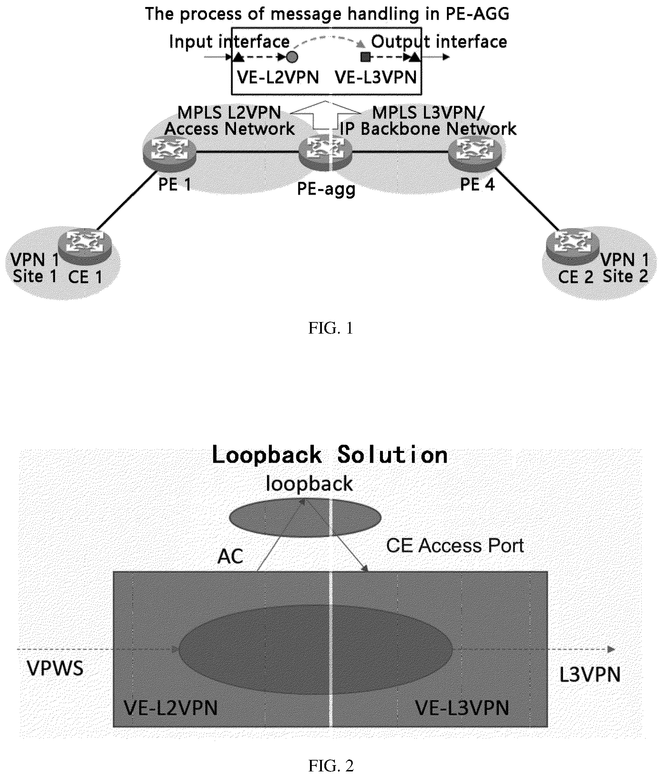

At present, as shown in Figure 1, it is a diagram of a networking for L2 VPN accessing L3 VPN or an IP backbone network. PE-AGG achieves the above functions through the following methods:
Creating a VE (Virtual Ethernet) interface, that is a VE-L2 VPN (referred to L2 VE for short) interface, on the PE-AGG for terminating MPLS L2 VPN packets.

Creating a VE logical interface that is a VE-L3 VPN (referred to as L3 VE for short) interface, on the PE-AGG for accessing packets into the backbone network. The IP address of this interface needs to be in the same subnet as the IP address of CE1. In response to determining that MPLS L3 VPN acts as the backbone network, the L3 VE logical interface needs to be bound with VPN instances to forward user packets through a private network routing.

The L2 VE logical interface forwards the restored original layer 2 packets to the L3 VE logical interface with the same interface number in a direct manner. The L2 VE and L3 VE logical interfaces with the same interface number seem to be directly connected through a physical line.

At present, PE-AGG processes traffic between L2 VPN and L3 VPN in a loopback manner. For example, as shown in Figure 2 combined with Figure 1, an ARP packet sent by CE1 has made a L2VPN encapsulation by PE1, goes into PE-AGG, the packet is decapsulated by PE-AGG, exits through the AC port, makes a loopback and enters a CE access port, looks up the routing table to make a L3 VPN encapsulation on the packet and exit it, at the same time the CE access port learns the ARP of CE1; traffic from L3 VPNs to L2 VPNs. Traffic coming in from the L3 VPN public port is decapsulated, exits through the CE access port, makes a loopback and enters the AC port of L2 VPN, goes out to PE1 via the PW port of VPWS, and returns to CE1. In the loopback solution, VPN deployment is limited by the bandwidth of the loopback port and requires additional physical interfaces (AC port and CE access port).

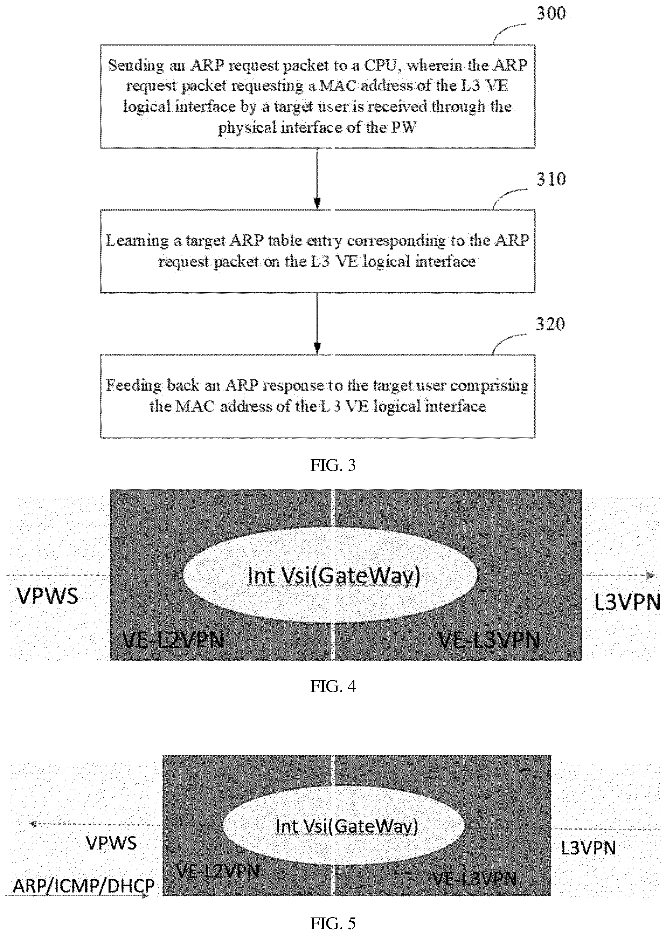

Referring to the detailed schematic diagram of a method for inter-communication between L2 VPNs and L3 VPNs provided by the example of the present disclosure as shown in Figure 3. This method is applied to PE-AGG equipment, which comprises a physical interface of a pseudo wire (PW) of L2 VPN, a physical interface of a public network of L3 VPN, L2 VE logical interfaces, and L3 VE logical interfaces. The method comprises the following blocks:
Block 300: sending an ARP request packet to a CPU, wherein the ARP request packet requesting a MAC address of the L3 VE logical interface by a target user is received through the physical interface of the PW.

In the present example of the disclosure, the PE-AGG equipment merely has the physical ports of the PW of VPWS (VPWS is the abbreviation of Virtual Private Wire Service, which refers to providing high-speed layer 2 transparent transmission between a pair of ports on two routers built on the infrastructure of MPLS network) and the physical ports of the public network of L3 VPN; VE-L2 VPN (L2 VE)/VE-L3 VPN (L3 VE) are logical ports.

During the ARP learning phase, the ARP request packet (such as an ARP request packet sent by CE1 to request the MAC address of the L3 VE logical interface (gateway)) received through the physical interface of the PW are sent to the CPU for an ARP learning in a direct manner.

Block 310: learning a target ARP table entry corresponding to the ARP request packet on the L3 VE logical interface.

Wherein, a MAC address comprised in the target ARP table entry is a MAC address of the target user, an outgoing interface comprised in the target ARP table entry is the L2 VE logical interface, and the target ARP table entry is used to indicate traffic forwarding from the target user's L3 VPN to L2 VPN.

The CPU of the PE-AGG equipment learns the ARP on the L3 VE interface after receiving the ARP request packet, the ARP table entry that has been learnt comprises the MAC address of CE1 and the outgoing interface, with the outgoing interface being the L2 VE interface. This ARP table entry is to guide the traffic forwarding from a L3 VPN side network to a L2VPN side network for CE1.

Block 320: feeding back an ARP response to the target user comprising the MAC address of the L3 VE logical interface.

The CPU of the PE-AGG equipment feeds back to CE1 the ARP response comprising the MAC address of the L3 VE logical interface. This ARP response is sent out from the L2 VE logical interface, and the private network and public network labels of VPWS are encapsulated directly.

After obtaining the MAC address of the L3 VE logical interface, CE1 may send traffic to L3 VPN network through the L3 VE interface.

In this implementation example, the method further comprises the following blocks: obtaining an original packet by terminating a L2 VPN packet received through the L2 VE interface, wherein a destination MAC address of the original packet is the MAC address of the L3 VE logical interface; sending the original packet to the L3 VE logical interface based on the destination MAC address of the original packet; performing a routing lookup, implementing an L3 VPN encapsulation on the original packet through the L3 VE logical interface, and forwarding an encapsulated L3 VPN packet through the physical interface of the public network of L3 VPN.

As shown in Figure 4, for the traffic from L2 VPN to L3 VPN, for PE-AGG, establish L2 VPN with a PW (a physical interface of the PW) and the L2 VE logical interface. The L2 VE logical interface receives the packet sent by the PW, decapsulates the packet to obtain the original packet, and at this point, does not go through the Point-to-Point(a link-layer protocol designed for transmitting data packets between equivalent units) process of VPWS. In response to determining that an inner layer MAC of the original packet is the MAC of the L3 VE logical interface (Int Vsi (GateWay)), the original packet is forwarded to the L3 VE logical interface, encapsulated into an L3 VPN packet by performing a routing lookup, and then the encapsulated L3 VPN packet is forwarded.

Furthermore, in this implementation example, after the L3 VE logical interface learns the ARP corresponding to CE1, it may achieve the traffic forwarding from the L3 VPN side network to the L2 VPN side network for CE1.

In this implementation example, obtaining an original packet by decapsulating a L3 VPN packet received through the L3 VE logical interface; looking up an ARP table based on a destination IP address of the original packet to obtain a target MAC address corresponding to the destination IP address of the original packet; replacing the destination MAC address of the original packet with the target MAC address, to obtain a packet with the replaced MAC address; implementing a L2 VPN encapsulation on the packet with the replaced MAC address through the L2 VE logical interface, and forwarding an encapsulated L2 VPN packet through the physical interface of the PW of L2 VPN.

As shown in Figure 5, for the packet coming from L3 VPN network side, after checking the ARP, the checked outgoing interface is the L2 VE logical interface. Due to the support of a single PW, a primary or a secondary PW, and an ECMP by VPWS. If VPWS supports the primary or the secondary PW, or the ECMP, due to hardware limitations, in this implementation example, a second-level ECMP architecture is adopted to achieve the separation of private and public networks for the PW.

In this implementation example, in response to determining that the PW is a primary or a secondary PW or an ECMP equivalent multi-path route; the outgoing interfaces of the target ARP are multiple L2 VE logical interfaces; determining a target PW for transmitting traffic to which the L3 VPN packet belongs; replacing the destination MAC address of the original packet with the target MAC address and encapsulating a private network label of the target PW through a first-level FEC Forwarding Equivalence Class encapsulation based on the ECMP; obtaining the encapsulated L2 VPN packet by encapsulating a public network label of the target PW through a second-level FEC encapsulation to L2 VPN based on the ECMP.

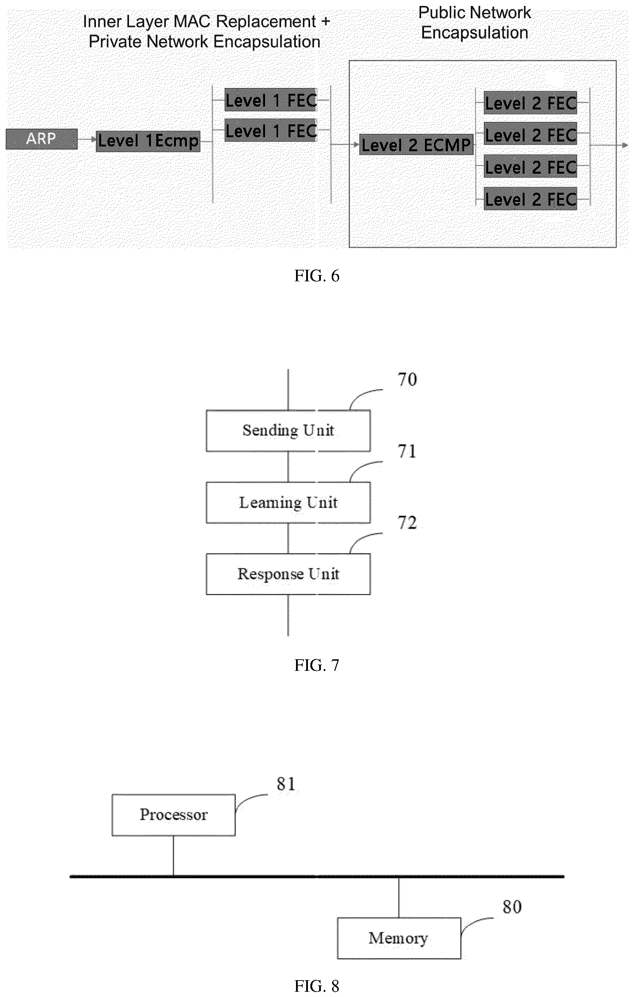

As shown in Figure 6, because the ARP only supports a single output, for the traffic from L3 VPNs to L2 VPNs, in response to determining that the PW is a primary or a secondary FRR or the PW is ECMP, the ARP actually has multiple outputs. In this case, the ARP resources are uniformly allocated to ECMP, where one ARP corresponds to multiple output interfaces, ECMP replaces the inner MAC through the first-level FEC encapsulation, and encapsulates the private network label of the PW. The second-level ECMP uses the FEC of the PW public network to encapsulate the public network label of the PW.

In practical examples, in response to determining that the private network of the PW changes, or in response to determining that the primary or the secondary PW or PW ECMP changes, ARP updates will be triggered in an active manner, the relevant table entries are updated. When a routing is issued, in response to determining that the route points to an ARP, the contents of the ARP need to be expanded (it is only a next hop at the beginning, now a collection of next hops).

As shown in Figure 7, a schematic diagram of a structure of an apparatus for inter-communication between L2 VPNs and L3 VPNs provided in this disclosure example is provided. This apparatus is applied to a PE-AGG equipment, which comprises a physical interface of a PW for L2 VPN, a physical interface of a public network of L3 VPN, a L2 VE logical interface, and a L3 VE logical interface, wherein the apparatus comprises:
a sending unit 70, to send an ARP request packet to a CPU, wherein the ARP request packet requesting a MAC address of the L3 VE logical interface by a target user is received through the physical interface of the PW;
a learning unit 71, to learn a target ARP table entry corresponding to the ARP request packet on the L3 VE logical interface, wherein a MAC address comprised in the target ARP table entry is a MAC address of the target user, an outgoing interface comprised in the target ARP table entry is the L2 VE logical interface, and the target ARP table entry is used to indicate traffic forwarding from the target user's L3 VPN to L2 VPN;
a response unit 72, to feed back an ARP response to the target user comprising the MAC address of the L3 VE logical interface.

Preferably, the apparatus further comprises:
a termination unit, to obtain an original packet by terminating a L2 VPN packet received through the L2 VE interface, wherein a destination MAC address of the original packet is the MAC address of the L3 VE logical interface;
a sending unit, to send the original packet to the L3 VE logical interface based on the destination MAC address of the original packet;
a forwarding unit, to perform a routing lookup, implement an L3 VPN encapsulation on the original packet through the L3 VE logical interface, and forward an encapsulated L3 VPN packet through the physical interface of the public network of L3 VPN.

Preferably, the apparatus further comprises:
a decapsulation unit, to obtain an original packet by decapsulating a L3 VPN packet received through the L3 VE logical interface;
a lookup unit, to lookup an ARP table based on a destination IP address of the original packet to obtain a target MAC address corresponding to the destination IP address of the original packet;
a replacement unit, to replace the destination MAC address of the original packet with the target MAC address, to obtain a packet with the replaced MAC address;
an encapsulation unit, to implement a L2 VPN encapsulation on the packet with the replaced MAC address through the L2 VE logical interface, and forward an encapsulated L2 VPN packet through the physical interface of the PW of L2 VPN.

Preferably, wherein if the PW is a primary or a secondary PW or an ECMP equivalent multi-path route; the outgoing interfaces of the target ARP are multiple L2 VE logical interfaces;
the apparatus further comprises a determining unit, to determine a target PW for transmitting traffic to which the L3 VPN packet belongs;
the replacement unit is to replace the destination MAC address of the original packet with the target MAC address and encapsulate a private network label of the target PW through a first-level FEC Forwarding Equivalence Class encapsulation based on the ECMP;
the encapsulation unit is to obtain the encapsulated L2 VPN packet by encapsulating a public network label of the target PW through a second-level FEC encapsulation to L2 VPN based on the ECMP.

These units may be configured as one or more integrated circuits to implement the above methods, such as one or more Application Specific Integrated Circuits (ASICs), one or more digital signal processors (DSPs), or one or more Field Programmable Gate Arrays (FPGAs). For example, in response to determining that one of the units is implemented in the form of a processing element scheduling program code, the processing element may be a general-purpose processor, such as a central processing unit (CPU) or other processors that may call program codes. Furthermore, these units may be integrated together in the form of a system-on-a-chip (SOC).

Furthermore, from a hardware perspective, the schematic diagram of hardware architecture of the L3 VPN and L2 VPN apparatus provided in the examples of the disclosure may be seen in FIG. 8. The L3 VPN and L2 VPN apparatus may comprise: a memory 80 and a processor 81.

The memory 80 is to store program instructions; the processor 81 calls the program instructions stored in the memory 80, and execute the above method examples according to the obtained program instructions. The specific implementation method and technical effect are similar, and will not be described here.

Preferably, the disclosure further provides a PE-AGG apparatus, comprising one or more processing element (or chip) for implementing the above method examples.

Preferably, the disclosure further provides a program product, such as a computer-readable storage medium having stored therein computer-executable instructions, which are to cause the computer to execute the above method examples.

**Herein,** the machine-readable storage medium may be any electronic, magnetic, optical, or other physical storage apparatus, and may contain or store information such as executable instructions, data, and so on. For example, the machine-readable storage medium may be: RAM (Random Access Memory), volatile memory, non-volatile memory, flash memory, storage drive (such as hard drive), solid-state drive, any type of storage disk (such as CD-ROM, DVD, etc.), or similar storage media, or a combination thereof.

**The** systems, apparatuses, modules, or units described in the examples may be specifically implemented by computer chips or entities, or by products with certain functions. A typical implementation equipment is a computer, and the specific form of the computer may be a personal computer, a laptop computer, a cell phone, a camera phone, a smartphone, a personal digital assistant, a media player, a navigation equipment, email equipment, a game console, a tablet computer, wearable equipment, or a combination of any of these equipment.

For ease of description, the above apparatuses are described separately in various units based on their functions. Of course, in response to determining that implementing the disclosure, the functions of each unit may be implemented in the same or multiple software and/or hardware.

Those skilled in the art will understand that the examples of the disclosure may be provided as methods, systems, or computer program products. Therefore, the examples of the disclosure may be implemented in the form of completely hardware, completely software, or a combination of software and hardware. Furthermore, the examples of the disclosure may be implemented in the form of computer program products implemented on one or more computer-readable storage medium (comprising but not limited to a disk storage, a CD-ROM, an optical storage, etc.) containing computer-executable program codes.

The examples of the disclosure are described with reference to flowcharts and/or block diagrams of methods, apparatuses (systems), and computer program products according to the examples of the disclosure. It should be understood that each flow and/or block in the flowcharts and/or block diagrams may be implemented by computer program instructions, and the combination of the flows and/or blocks in the flowcharts and/or block diagrams may further be provided by computer program instructions. These computer program instructions may be provided to processors of a general computer, a dedicated computer, an embedded processor, or other programmable data processing apparatuses to produce a machine, so that the instructions executed by the computers or other programmable data processing apparatuses produce processes for implementing the functions specified in the flowchart or block diagram.

Furthermore, these computer program instructions may further be stored in a computer-readable storage medium that may boot a computer or other programmable data processing apparatus to operate in a specific manner, so that the instructions stored in the computer-readable storage medium produce a manufacture including an apparatus comprising instructions for implementing the functions specified in one or more schematic diagrams in the schematic diagrams and/or one or more blocks in the block diagrams.

These computer program instructions may further be loaded onto a computer or other programmable data processing apparatus to perform thereon a series of operational processes to produce the process implemented by the computer, such that the instructions executed on the computer or other programmable apparatus provide processes blocks for implementing the functions specified in one or more schematic diagrams in the schematic diagrams and/or one or more blocks in the block diagrams.

## Claims

1. A method for inter-communication between L2 and L3 VPNs, applied to a Provider Edge- Aggregation (PE-AGG) equipment comprising a physical interface of a pseudo wire (PW) of L2 VPN, a physical interface of a public network of L3 VPN, a L2 VE logical interface, and a L3 VE logical interface, wherein the method comprises:
sending an ARP request packet to a CPU, wherein the ARP request packet requesting a MAC address of the L3 VE logical interface by a target user is received through the physical interface of the PW;
learning a target ARP table entry corresponding to the ARP request packet on the L3 VE logical interface, wherein a MAC address comprised in the target ARP table entry is a MAC address of the target user, an outgoing interface comprised in the target ARP table entry is the L2 VE logical interface, and the target ARP table entry is used to indicate traffic forwarding from the target user's L3 VPN to L2 VPN;
feeding back an ARP response to the target user comprising the MAC address of the L3 VE logical interface.

2. The method according to claim 1, wherein the method further comprises:
obtaining an original packet by terminating a L2 VPN packet received through the L2 VE interface, wherein a destination MAC address of the original packet is the MAC address of the L3 VE logical interface;
sending the original packet to the L3 VE logical interface based on the destination MAC address of the original packet;
performing a routing lookup, implementing an L3 VPN encapsulation on the original packet through the L3 VE logical interface, and forwarding an encapsulated L3 VPN packet through the physical interface of the public network of L3 VPN.

3. The method according to claim 1 or 2, wherein the method further comprises:
obtaining an original packet by decapsulating a L3 VPN packet received through the L3 VE logical interface;
looking up an ARP table based on a destination IP address of the original packet to obtain a target MAC address corresponding to the destination IP address of the original packet;
replacing the destination MAC address of the original packet with the target MAC address, to obtain a packet with the replaced MAC address;
implementing a L2 VPN encapsulation on the packet with the replaced MAC address through the L2 VE logical interface, and forwarding an encapsulated L2 VPN packet through the physical interface of the PW of L2 VPN.

4. The method according to claim 3, wherein in response to determining the PW is a primary or a secondary PW or an ECMP equivalent multi-path route; the outgoing interfaces of the target ARP are multiple L2 VE logical interfaces;
determining a target PW for transmitting traffic to which the L3 VPN packet belongs;
replacing the destination MAC address of the original packet with the target MAC address and encapsulating a private network label of the target PW through a first-level Forwarding Equivalence Class (FEC) encapsulation based on the ECMP;
obtaining the encapsulated L2 VPN packet by encapsulating a public network label of the target PW through a second-level FEC encapsulation to L2 VPN based on the ECMP.

5. An apparatus for inter-communication between L2 and L3 VPNs, applied to a PE aggregation equipment comprising a physical interface of a PW of L2 VPN, a physical interface of a public network of L3 VPN, a L2 VE logical interface, and a L3 VE logical interface, wherein the apparatus comprises:
a sending unit, to send an ARP request packet to a CPU, wherein the ARP request packet requesting a MAC address of the L3 VE logical interface by a target user is received through the physical interface of the PW;
a learning unit, to learn a target ARP table entry corresponding to the ARP request packet on the L3 VE logical interface, wherein a MAC address comprised in the target ARP table entry is a MAC address of the target user, an outgoing interface comprised in the target ARP table entry is the L2 VE logical interface, and the target ARP table entry is used to indicate traffic forwarding from the target user's L3 VPN to L2 VPN;
a response unit, to feed back an ARP response to the target user comprising the MAC address of the L3 VE logical interface.

6. The apparatus according to claim 5, wherein the apparatus further comprises:
a termination unit, to obtain an original packet by terminating a L2 VPN packet received through the L2 VE interface, wherein a destination MAC address of the original packet is the MAC address of the L3 VE logical interface;
a sending unit, to send the original packet to the L3 VE logical interface based on the destination MAC address of the original packet;
a forwarding unit, to perform a routing lookup, implement an L3 VPN encapsulation on the original packet through the L3 VE logical interface, and forward the encapsulated L3 VPN packet through the physical interface of the public network of L3 VPN.

7. The apparatus according to claim 5 or 6, wherein the apparatus further comprises:
a decapsulation unit, to obtain an original packet by decapsulating a L3 VPN packet received through the L3 VE logical interface;
a lookup unit, to lookup an ARP table based on a destination IP address of the original packet to obtain a target MAC address corresponding to the destination IP address of the original packet;
a replacement unit, to replace the destination MAC address of the original packet with the target MAC address, to obtain a packet with the replaced MAC address;
an encapsulation unit, to implement a L2 VPN encapsulation on the packet with the replaced MAC address through the L2 VE logical interface, and forward an encapsulated L2 VPN packet through the physical interface of the PW of L2 VPN.

8. The apparatus according to claim 7, wherein if the PW is a primary or a secondary PW or an ECMP equivalent multi-path route; the outgoing interfaces of the target ARP are multiple L2 VE logical interfaces;
the apparatus further comprises a determining unit, to determine a target PW for transmitting traffic to which the L3 VPN packet belongs;
the replacement unit is to replace the destination MAC address of the original packet with the target MAC address and encapsulate a private network label of the target PW through a first-level FEC Forwarding Equivalence Class encapsulation based on the ECMP;
the encapsulation unit is to obtain the encapsulated L2 VPN packet by encapsulating a public network label of the target PW through a second-level FEC encapsulation to L2 VPN based on the ECMP.

9. An apparatus for inter-communication between L2 and L3 VPNs, comprising:
a memory, to store program instructions;
a processor, to call the program instructions stored in the memory, and execute blocks of the method according to any one of claims 1-4 according to obtained program instructions.

10. A computer-readable storage medium having stored therein computer-executable instructions, which are to cause the computer to perform blocks of the method according to any one of claims 1-4.

## Patentansprüche

1. Verfahren zur Interkommunikation zwischen L2- und L3-VPNs, das auf eine Provider Edge-Aggregation (PE-AGG)-Ausrüstung angewendet wird, die eine physikalische Schnittstelle eines Pseudo-Wires (PW) eines L2-VPN, eine physikalische Schnittstelle eines öffentlichen Netzwerks eines L3-VPN, eine logische L2-VE-Schnittstelle und eine logische L3-VE-Schnittstelle umfasst, wobei das Verfahren umfasst:
Senden eines ARP-Anforderungspakets an eine CPU, wobei das ARP-Anforderungspaket, das eine MAC-Adresse der logischen L3-VE-Schnittstelle durch einen Zielbenutzer anfordert, über die physikalische Schnittstelle des PW empfangen wird;
Erlernen eines Ziel-ARP-Tabelleneintrags, der dem ARP-Anforderungspaket auf der logischen L3-VE-Schnittstelle entspricht, wobei eine in dem Ziel-ARP-Tabelleneintrag enthaltene MAC-Adresse eine MAC-Adresse des Zielbenutzers ist, eine in dem Ziel-ARP-Tabelleneintrag enthaltene ausgehende Schnittstelle die logische L2-VE-Schnittstelle ist, und der Ziel-ARP-Tabelleneintrag verwendet wird, um die Weiterleitung von Datenverkehr vom L3-VPN des Zielbenutzers zum L2-VPN anzuzeigen;
Rückmelden einer ARP-Antwort an den Zielbenutzer, die die MAC-Adresse der logischen L3-VE-Schnittstelle umfasst.

2. Verfahren nach Anspruch 1, wobei das Verfahren ferner umfasst:
Erhalten eines Originalpakets durch Beenden eines über die L2-VE-Schnittstelle empfangenen L2-VPN-Pakets, wobei eine Ziel-MAC-Adresse des Originalpakets die MAC-Adresse der logischen L3-VE-Schnittstelle ist;
Senden des Originalpakets an die logische L3-VE-Schnittstelle auf der Grundlage der Ziel-MAC-Adresse des Originalpakets;
Durchführen einer Routingabfrage, Implementieren einer L3-VPN-Kapselung für das Originalpaket über die logische L3-VE-Schnittstelle, und Weiterleiten eines gekapselten L3-VPN-Pakets über die physische Schnittstelle des öffentlichen Netzwerks des L3-VPN.

3. Verfahren nach Anspruch 1 oder 2, wobei das Verfahren ferner umfasst:
Erhalten eines ursprünglichen Pakets durch Entkapseln eines über die logische L3-VE-Schnittstelle empfangenen L3-VPN-Pakets;
Nachschlagen einer ARP-Tabelle auf der Grundlage einer Ziel-IP-Adresse des ursprünglichen Pakets, um eine Ziel-MAC-Adresse zu erhalten, die der Ziel-IP-Adresse des ursprünglichen Pakets entspricht;
Ersetzen der Ziel-MAC-Adresse des Originalpakets durch die Ziel-MAC-Adresse, um ein Paket mit der ersetzten MAC-Adresse zu erhalten;
Implementieren einer L2-VPN-Kapselung auf das Paket mit der ersetzten MAC-Adresse über die logische L2-VE-Schnittstelle, und Weiterleiten eines gekapselten L2-VPN-Pakets über die physische Schnittstelle des PW des L2-VPN.

4. Verfahren nach Anspruch 3, wobei als Reaktion auf die Bestimmung, dass das PW ein primäres oder sekundäres PW oder eine ECMP-äquivalente Mehrwegroute ist; die ausgehenden Schnittstellen des Ziel-ARP mehrere logische L2-VE-Schnittstellen sind;
Bestimmen einer Ziel-PW zum Übertragen von Datenverkehr, zu dem das L3-VPN-Paket gehört;
Ersetzen der Ziel-MAC-Adresse des ursprünglichen Pakets durch die Ziel-MAC-Adresse und Kapseln eines privaten Netzwerklabels des Ziel-PW durch eine Kapselung auf der ersten Ebene der Forwarding Equivalence Class (FEC) basierend auf dem ECMP;
Erhalten des gekapselten L2-VPN-Pakets durch Kapseln eines öffentlichen Netzwerklabels des Ziel-PW durch eine Kapselung der zweiten Ebene der FEC zu L2-VPN basierend auf dem ECMP.

5. Vorrichtung zur Interkommunikation zwischen L2- und L3-VPNs, die auf eine PE-Aggregationsausrüstung angewendet wird, die eine physikalische Schnittstelle eines PW von L2-VPN, eine physikalische Schnittstelle eines öffentlichen Netzwerks von L3-VPN, eine logische L2-VE-Schnittstelle und eine logische L3-VE-Schnittstelle umfasst, wobei die Vorrichtung umfasst:
eine Sendeeinheit zum Senden eines ARP-Anforderungspakets an eine CPU, wobei das ARP-Anforderungspaket, das eine MAC-Adresse der logischen L3-VE-Schnittstelle durch einen Zielbenutzer anfordert, über die physikalische Schnittstelle des PW empfangen wird;
eine Lerneinheit zum Erlernen eines Ziel-ARP-Tabelleneintrags, der dem ARP-Anforderungspaket auf der logischen L3-VE-Schnittstelle entspricht, wobei eine in dem Ziel-ARP-Tabelleneintrag enthaltene MAC-Adresse eine MAC-Adresse des Zielbenutzers ist, eine in dem Ziel-ARP-Tabelleneintrag enthaltene ausgehende Schnittstelle die logische L2-VE-Schnittstelle ist, und der Ziel-ARP-Tabelleneintrag verwendet wird, um die Weiterleitung von Datenverkehr vom L3-VPN des Zielbenutzers zum L2-VPN anzuzeigen;
eine Antwort-Einheit zum Zurückgeben einer ARP-Antwort an den Zielbenutzer, die die MAC-Adresse der logischen L3-VE-Schnittstelle umfasst.

6. Vorrichtung nach Anspruch 5, wobei die Vorrichtung ferner umfasst:
eine Terminierungs-Einheit zum Erhalten eines Originalpakets durch Terminieren eines über die L2-VE-Schnittstelle empfangenen L2-VPN-Pakets, wobei eine Ziel-MAC-Adresse des Originalpakets die MAC-Adresse der logischen L3-VE-Schnittstelle ist;
eine Sendeeinheit zum Senden des Originalpakets an die logische L3-VE-Schnittstelle auf der Grundlage der Ziel-MAC-Adresse des Originalpakets;
eine Weiterleitungseinheit zum Durchführen einer Routing-Suche, zum Implementieren einer L3-VPN-Kapselung für das Originalpaket über die logische L3-VE-Schnittstelle und zum Weiterleiten des gekapselten L3-VPN-Pakets über die physikalische Schnittstelle des öffentlichen Netzwerks des L3-VPN.

7. Vorrichtung nach Anspruch 5 oder 6, wobei die Vorrichtung ferner umfasst:
eine Entkapselungseinheit zum Erhalten eines ursprünglichen Pakets durch Entkapseln eines über die logische Schnittstelle L3 VE empfangenen L3-VPN-Pakets;
eine Sucheinheit zum Durchsuchen einer ARP-Tabelle auf der Grundlage einer Ziel-IP-Adresse des ursprünglichen Pakets, um eine Ziel-MAC-Adresse zu erhalten, die der Ziel-IP-Adresse des ursprünglichen Pakets entspricht;
eine Ersatzeinheit, um die Ziel-MAC-Adresse des ursprünglichen Pakets durch die Ziel-MAC-Adresse zu ersetzen, um ein Paket mit der ersetzten MAC-Adresse zu erhalten;
eine Kapselungseinheit, um eine L2-VPN-Kapselung für das Paket mit der ersetzten MAC-Adresse über die logische L2-VE-Schnittstelle zu implementieren, und ein gekapseltes L2-VPN-Paket über die physikalische Schnittstelle des PW des L2-VPN weiterzuleiten.

8. Vorrichtung nach Anspruch 7, wobei wenn die PW eine primäre oder sekundäre PW oder eine ECMP-äquivalente Mehrfachpfadroute ist; die ausgehenden Schnittstellen des Ziel-ARP mehrere logische L2-VE-Schnittstellen sind;
die Vorrichtung ferner eine Bestimmungseinheit umfasst, um eine Ziel-PW zum Übertragen von Datenverkehr zu bestimmen, zu dem das L3-VPN-Paket gehört;
die Ersatzeinheit dazu dient, die Ziel-MAC-Adresse des ursprünglichen Pakets durch die Ziel-MAC-Adresse zu ersetzen und ein privates Netzwerklabel des Ziel-PW durch eine Kapselung auf erster Ebene der Forwarding Equivalence Class, FEC, auf der Grundlage des ECMP zu kapseln;
die Kapselungseinheit dazu dient, das gekapselte L2-VPN-Paket zu erhalten, indem ein öffentliches Netzwerklabel des Ziel-PW durch eine FEC-Kapselung der zweiten Ebene zu L2-VPN auf der Grundlage des ECMP gekapselt wird.

9. Vorrichtung zur Kommunikation zwischen L2- und L3-VPNs, umfassend:
einen Speicher zum Speichern von Programmbefehlen;
einen Prozessor zum Aufrufen der im Speicher gespeicherten Programmbefehle und zum Ausführen von Blöcken des Verfahrens gemäß einem der Ansprüche 1 bis 4 gemäß den erhaltenen Programmbefehlen.

10. Computerlesbares Speichermedium, auf dem computerausführbare Befehle gespeichert sind, die den Computer veranlassen, Blöcke des Verfahrens gemäß einem der Ansprüche 1 bis 4 auszuführen.

## Revendications

1. Procédé pour une intercommunication entre des VPN de L2 et de L3, appliqué à un équipement d'agrégation côté fournisseur (PE-AGG) comprenant une interface physique d'un pseudo-filaire (PW) du VPN de L2, une interface physique d'un réseau public du VPN de L3, une interface logique VE de L2 et une interface logique VE de L3, dans lequel le procédé comprend :
l'envoi d'un paquet de requête ARP à un CPU, dans lequel le paquet de requête ARP demandant une adresse MAC de l'interface logique VE de L3 par un utilisateur cible est reçu par le biais de l'interface physique du PW ;
l'apprentissage d'une entrée de table ARP cible correspondant au paquet de requête ARP sur l'interface logique VE de L3, dans lequel une adresse MAC comprise dans l'entrée de table ARP cible est une adresse MAC de l'utilisateur cible, une interface sortante comprise dans l'entrée de table ARP cible est l'interface logique VE de L2, et l'entrée de table ARP cible est utilisée pour indiquer un transfert de trafic du VPN de L3 de l'utilisateur cible au VPN de L2 ;
le renvoi d'une réponse ARP à l'utilisateur cible comprenant l'adresse MAC de l'interface logique VE de L3.

2. Procédé selon la revendication 1, dans lequel le procédé comprend en outre :
l'obtention d'un paquet d'origine en terminant un paquet de VPN de L2 reçu par le biais de l'interface VE de L2, dans lequel une adresse MAC de destination du paquet d'origine est l'adresse MAC de l'interface logique VE de L3 ;
l'envoi du paquet d'origine à l'interface logique VE de L3 sur la base de l'adresse MAC de destination du paquet d'origine ;
la réalisation d'une consultation de routage, la mise en œuvre d'une encapsulation de VPN de L3 sur le paquet d'origine par le biais de l'interface logique VE de L3, et le transfert d'un paquet de VPN de L3 encapsulé par le biais de l'interface physique du réseau public du VPN de L3.

3. Procédé selon la revendication 1 ou 2, dans lequel le procédé comprend en outre :
l'obtention d'un paquet d'origine en désencapsulant un paquet de VPN de L3 reçu par le biais de l'interface logique VE de L3 ;
la consultation d'une table ARP sur la base d'une adresse IP de destination du paquet d'origine pour obtenir une adresse MAC cible correspondant à l'adresse IP de destination du paquet d'origine ;
le remplacement de l'adresse MAC de destination du paquet d'origine par l'adresse MAC cible, pour obtenir un paquet avec l'adresse MAC remplacée ;
la mise en œuvre d'une encapsulation de VPN de L2 sur le paquet avec l'adresse MAC remplacée par le biais de l'interface logique VE de L2, et le transfert d'un paquet de VPN de L2 encapsulé par le biais de l'interface physique du PW du VPN de L2.

4. Procédé selon la revendication 3, dans lequel, en réponse à la détermination que le PW est un PW primaire ou secondaire ou une route multivoie équivalente ECMP ; les interfaces sortantes de l'ARP cible sont de multiples interfaces logiques VE de L2 ;
la détermination d'un PW cible pour transmettre le trafic auquel le paquet de VPN de L3 appartient ;
le remplacement de l'adresse MAC de destination du paquet d'origine par l'adresse MAC cible et l'encapsulation d'une étiquette de réseau privé du PW cible par le biais d'une encapsulation de classe d'équivalence de transfert (FEC) de premier niveau sur la base de l'ECMP ;
l'obtention du paquet de VPN de L2 encapsulé en encapsulant une étiquette de réseau public du PW cible par le biais d'une encapsulation de FEC de second niveau vers le VPN de L2 sur la base de l'ECMP.

5. Appareil pour une intercommunication entre des VPN de L2 et de L3, appliqué à un équipement d'agrégation de PE comprenant une interface physique d'un PW du VPN de L2, une interface physique d'un réseau public du VPN de L3, une interface logique VE de L2 et une interface logique VE de L3, dans lequel l'appareil comprend :
une unité d'envoi, pour envoyer un paquet de requête ARP à un CPU, dans lequel le paquet de requête ARP demandant une adresse MAC de l'interface logique VE de L3 par un utilisateur cible est reçu par le biais de l'interface physique du PW ;
une unité d'apprentissage, pour apprendre une entrée de table ARP cible correspondant au paquet de requête ARP sur l'interface logique VE de L3, dans lequel une adresse MAC comprise dans l'entrée de table ARP cible est une adresse MAC de l'utilisateur cible, une interface sortante comprise dans l'entrée de table ARP cible est l'interface logique VE de L2, et l'entrée de table ARP cible est utilisée pour indiquer un transfert de trafic du VPN de L3 de l'utilisateur cible au VPN de L2 ;
une unité de réponse, pour renvoyer une réponse ARP à l'utilisateur cible comprenant l'adresse MAC de l'interface logique VE de L3.

6. Appareil selon la revendication 5, dans lequel l'appareil comprend en outre :
une unité de terminaison, pour obtenir un paquet d'origine en terminant un paquet de VPN de L2 reçu par le biais de l'interface VE de L2, dans lequel une adresse MAC de destination du paquet d'origine est l'adresse MAC de l'interface logique VE de L3 ;
une unité d'envoi, pour envoyer le paquet d'origine à l'interface logique VE de L3 sur la base de l'adresse MAC de destination du paquet d'origine ;
une unité de transfert, pour réaliser une consultation de routage, mettre en œuvre une encapsulation de VPN de L3 sur le paquet d'origine par le biais de l'interface logique VE de L3, et transférer le paquet de VPN de L3 encapsulé par le biais de l'interface physique du réseau public du VPN de L3.

7. Appareil selon la revendication 5 ou 6, dans lequel l'appareil comprend en outre :
une unité de désencapsulation, pour obtenir un paquet d'origine en désencapsulant un paquet de VPN de L3 reçu par le biais de l'interface logique VE de L3 ;
une unité de consultation, pour consulter une table ARP sur la base d'une adresse IP de destination du paquet d'origine pour obtenir une adresse MAC cible correspondant à l'adresse IP de destination du paquet d'origine ;
une unité de remplacement, pour remplacer l'adresse MAC de destination du paquet d'origine par l'adresse MAC cible, pour obtenir un paquet avec l'adresse MAC remplacée ;
une unité d'encapsulation, pour mettre en œuvre une encapsulation de VPN de L2 sur le paquet avec l'adresse MAC remplacée par le biais de l'interface logique VE de L2, et transférer un paquet de VPN de L2 encapsulé par le biais de l'interface physique du PW du VPN de L2.

8. Appareil selon la revendication 7, dans lequel si le PW est un PW primaire ou secondaire ou une route multivoie équivalente ECMP ; les interfaces sortantes de l'ARP cible sont de multiples interfaces logiques VE de L2 ;
l'appareil comprend en outre une unité de détermination, pour déterminer un PW cible pour transmettre le trafic auquel le paquet de VPN de L3 appartient ;
l'unité de remplacement est destinée à remplacer l'adresse MAC de destination du paquet d'origine par l'adresse MAC cible et à encapsuler une étiquette de réseau privé du PW cible par le biais d'une encapsulation de classe d'équivalence de transfert FEC de premier niveau sur la base de l'ECMP ;
l'unité d'encapsulation est destinée à obtenir le paquet de VPN de L2 encapsulé en encapsulant une étiquette de réseau public du PW cible par le biais d'une encapsulation de FEC de second niveau vers le VPN de L2 sur la base de l'ECMP.

9. Appareil pour une intercommunication entre des VPN de L2 et de L3, comprenant :
une mémoire, pour stocker des instructions de programme ;
un processeur, pour appeler les instructions de programme stockées dans la mémoire, et exécuter des blocs du procédé selon l'une des revendications 1 à 4 selon des instructions de programme obtenues.

10. Support de stockage lisible par ordinateur sur lequel sont stockées des instructions exécutables par ordinateur, qui sont destinées à amener l'ordinateur à réaliser des blocs du procédé selon l'une des revendications 1 à 4.
